# EUROPÄISCHE PATENTSCHRIFT

(11) **EP 1 291 564 B1**
(45) Veröffentlichungstag und Bekanntmachung des Hinweises auf die Patenterteilung: **13.09.2006**
(21) Anmeldenummer: 02018700.1
(22) Anmeldetag: 21.08.2002
(51) Int. Cl.: F16L 3/12

(54) **Rohrbogenhalter**
Pipe elbow support
Support pour coude de tuyau

(30) Priorität: 07.09.2001 DE 10143969
(43) Veröffentlichungstag der Anmeldung: 12.03.2003
(73) Patentinhaber: gabo Systemtechnik GmbH, 94559 Niederwinkling (DE)
(72) Erfinder: Bauer, Peter, 94357 Konzell (DE); Pellkofer, Helmut, 94336 Hunderdorf (DE); Endlich, Patrizia, 94327 Bogen (DE)

(56) Entgegenhaltungen:
- DE-A- 19 927 859
- DE-U- 8 632 274
- GB-A- 598 363
- US-A- 5 248 119
- US-A- 5 419 519
- PATENT ABSTRACTS OF JAPAN vol. 2000, no. 25, 12. April 2001 (2001-04-12) & JP 2001 235058 A (TOKAI RUBBER IND LTD), 31. August 2001 (2001-08-31)

## Beschreibung

Die Erfindung bezieht sich auf einen Rohrbogenhalter gemäß dem Oberbegriff des Hauptanspruches.

Solche Rohrbogenhalter sind an sich bekannt und dienen dazu ein Fluidrohr, Schutzrohr, Kabel oder dergl. von einer Ebene in eine andere umzulenken.

So ist ein Rohrbogenhalter zum Umlenken von Leitungen beispielsweise in der DE PS 37 40 4868 beschrieben, der aus einer Grundplatte mit im Abstand voneinander vorgesehenen Einsteckvorrichtungen für um 180° schwenkbare Rohrbogen, insbesondere Schutzrohrbogen besteht. Weitere, ähnliche Rohbogenhalter gehen u.a. aus der DE 74 06 676 U1, DE 85 30100 U1 und DE 86 32 274.5 U1 hervor. Dabei wird die Umlenkung des auf einer Ebene verlegten Rohres in eine andere durch eine Rohrführung erreicht. Die fluidführenden Rohre sind dabei in Schutzrohren verlegt. Die US-PS 5,419,519 zeigt einen Kabelbogenschutz, wobei das Kabel entlang der Berührungslinie zweier Außenwände umgelenkt wird, um das Kabel von einer Außenwand auf eine zweite verlegen zu können.

Für die Umlenkung der Anschlussenden von dünnen Fluidrohren, wie sie bei Heiz- und Kühlregistern verwendet werden, oder beispielsweise Kabeln sind die bekannten Einrichtungen dieser Art nicht gut geeignet.

Bei steigenden Bedarf an vorgefertigten Rohrregistern, besonders für sogen. Klimawände, die in Montageplatten fertig verlegt sind, werden für deren aus der Montageplatte herausragenden Anschlussenden der Rohrregister an der Montageplatte montierbare Rohrbogenhalter für die Umlenkung dieser Anschlussenden aus einer Ebene in eine andere, normalerweise um 90°, benötigt, da die Versorgungsleitungen meist am Boden oder an der Decke verlegt sind.

Der Erfindung, wie sie in den Ansprüchen beschrieben ist, liegt daher die Aufgabe zugrunde einen Rohrhalter für die Umlenkung besonders der Anschlussenden von einer Ebene in eine andere Ebene, beispielsweise von einer senkrechten Wand auf den Boden oder Decke eines Raumes zu schaffen, wobei ein minimaler Biegeradius der dünnen Rohre nicht unterschritten wird.

Die mit dem erfindungsgemäßen Rohrhalter erzielten Vorteile liegen insbesondere in der einfachen Montage der Rohre im Rohrhalter selbst und im Verlauf der Rohrführung zunächst an der Montageplatte, dann rechtwinklig dazu anschließend in der Stoßkante der Montageplatte um dann, wieder etwa rechtwinklig in Richtung auf die am Boden verlegten Versorgungsleitungen zu verlaufen und weiterhin, daß eine möglichst enge Anlehnung der Rohre an die Registerplatte, bzw. Wand und den Boden oder Decke, in der Stoßkante, verwirklicht werden kann, wobei ein freier, ungeschützter Verlauf des Rohres von der Montageplatte auf den Boden vermieden ist; denn die Rohre besitzen nur einen minimalen Biegeradius, der nicht unterschritten werden darf, da sonst Knickstellen auftreten können und das Rohr in diesem Abschnitt Beschädigungen ausgesetzt ist. Bei entsprechender Dimensionierung der Rohrbogenführung kann der Rohr-bogenhalter auch für mehrere Rohrdimensionen eingesetzt werden, ohne daß die Rohre darin zu viel Spiel haben.

Die Erfindung ist nachstehend anhand eines in den Abbildungen dargestellten Ausführungsbeispieles näher erläutert.

Es zeigt:
- Fig. 1: einen Rohrbogenhalter gem. der Erfindung
- Fig. 2: eine weitere Ansicht der Fig. 1 und

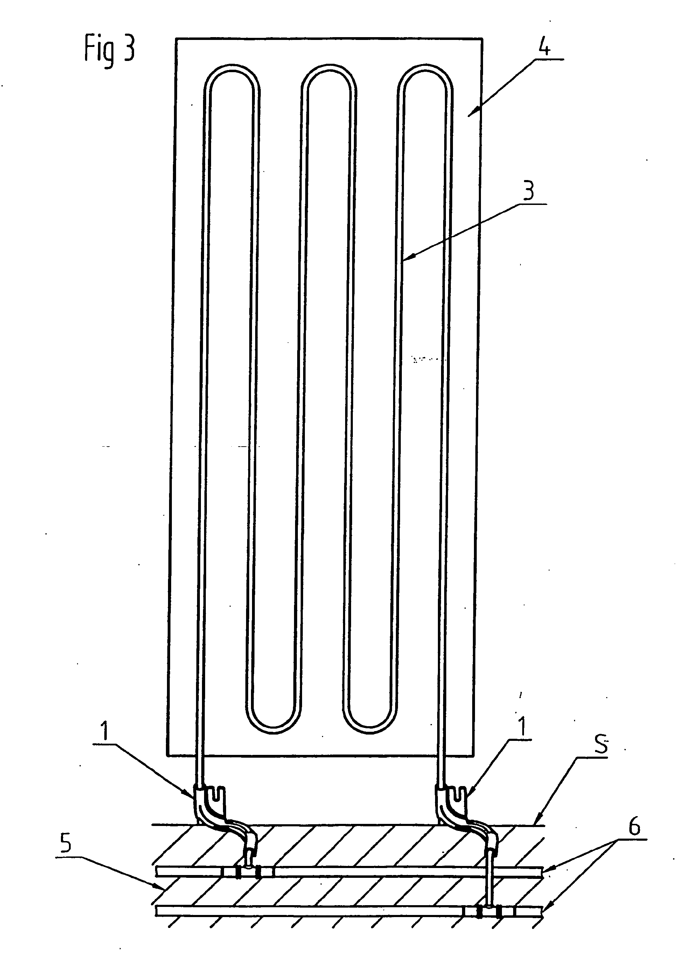

- Fig. 3: eine Registerplatte mit Rohrbogenhaltem

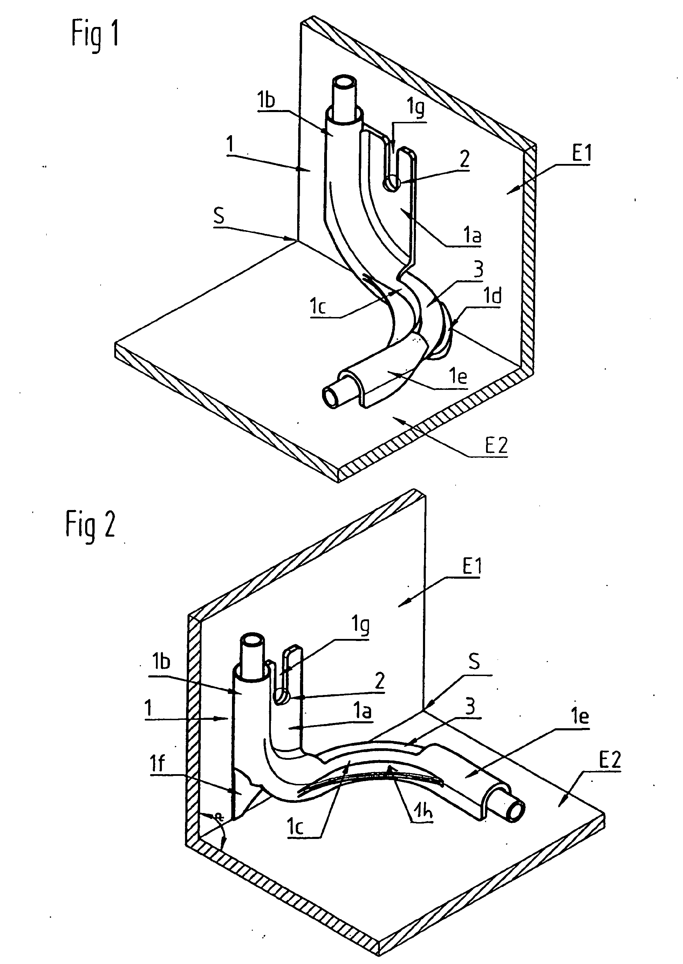

Der in der Abbildung 1 dargestellte Rohrbogenhalter besteht vorzugsweise aus einem Kunststoff-Spritzgußteil und besitzt eine Grundplatte 1a, die eine Befestigungsöffnung 1g für ein Befestigungsmittel 2 zum Befestigen an einer in der Abbildung 2 dargestellten Registerplatte 4 und eine Rohrführung mit den Bereichen 1c,1d,1e, wobei im Laufe der Rohrführung vom Ende des Rohrregisters in der Registerplatte 4 (Ebene 1) zu den auf dem Fußboden oder der Decke 5 (Ebene 2) verlegten Versorgungsleitungen 6 das Rohr 3 einen doppelten 90° Winkel in zwei senkrecht aufeinanderstehenden Ebenen durchläuft. Dabei ist das Rohr 3 derart im Bogen verlegt, daß sein minimaler Biegeradius an keiner Stelle unterschritten wird, Beschädigungen in diesem Abschnitt vermieden sind und das Rohr außerdem nach Einschieben, bzw. Einlegen in den oberen Bereich 1b der Rohrführung auf einfache Weise in den nach unten bzw. seitlich offenen mittleren Bereich 1c-d und den nach unten offenen Endbereich 1e eingedrückt werden kann.

Die Rohrführung umhüllt das eingelegte Rohr zumindest teilweise. Sie weist in ihrem oberen Bereich die Form eines zur Ebene E1, z.B. Registerplatte 4 parallelen Bogens auf, der im Bereich 1c-d in eine zur Stoßkante S der beiden Ebenen E1-E2 parallelen Tangente mündet, an die sich dann ein Bogen anschließt, der parallel zur Ebene E2 verläuft und dessen Rohrverlauf bei 1e etwa senkrecht von der Ebene E1, z.B. Registerplatte 4 wegführt.

Die Grundplatte 1a weist, außer der Befestigungsöffnung 1g noch einen Fortsatz 1f unterhalb des Bereiches 1b auf, mit dem sich der Rohrhalter auf dem Boden oder der Decke 4 (Ebene E2) abstützt. Zusätzlich stützt der Rohrhalter 1 sich noch mit der Unterseite des Bereiches 1d und den beiden freien Schenkeln des U-förmig ausgebildeten Bereiches 1e, die das Rohr 3 von oben umfassen, auf dem Boden, oder der Decke 5 ab.

Somit ist eine exakte Führung der Anschlussenden der Rohre 3 von der Registerplatte 4 zu den auf dem Boden oder der Decke 5 verlegten Versorgungsleitungen 6, d.h. von Ebene E1 in die Ebene E2 gewährleistet, ohne daß bei der Umlenkung von der einen Ebene in die andere ein durch den Biegeradius des Rohres 3 bedingter ungeschützter freier Raum verbleibt. Das Rohr 3 verläuft, wegen der doppelten Umlenkung, jeweils an der Registerplatte 4, in der Stoßkante S der beiden Ebenen und dem Boden, bzw. der Decke 5 von der Registerplatte 4, d.h.der Ebene E2.

Die Erfindung ist selbstverständlich nicht auf die Umlenkung von Rohren von Heizungs- und/oder Kühlanlagen beschränkt. Sie kann mit Vorteil überall dort eingesetzt werden, wo empfindliche Fluidleitungen aus Metall oder Kunststoff, Elektrokabel, Glasfaserkabel oder dergl. geschützt mit genau einzuhaltenden Biegeradien von einer Ebene in eine andere umgelenkt werden müssen.

### Bezugszeichenliste

- 1: Rohrhalter mit Rohrführung
- 2: Befestigungsmittel
- 3: Rohr
- 4: Registerplatte
- 5: Boden/Decke
- 6: Versorgungsleitungen

- 1a: Grundplatte
- 1b: oberer Bereich der Rohrführung
- 1c: paralleler Bogenbereich der Rohrführung
- 1d,h: mittlerer Bereich der Führung
- 1e: Endbereich der Führung
- 1f: Fortsatz der Grundplatte 1a
- 1g: Befestigungsöffnung

- E1: Ebene 1 = Registerplatte 4
- E2: Ebene 2 = Decke oder Boden 5
- S: Stoßkante Ebene1 / Ebene2

## Patentansprüche

1. Rohrbogenhalter mit einer Führung zur Umlenkung eines Rohres (3) aus einer ersten Ebene (E1) in einer zweiten Ebene (E2), enthaltend die Merkmale:
a) die beiden Ebenen (E1 und E2) stossen in einer Stosskante (S) zusammen,
b) es ist ein Rohrführungsbauteil (1) und mindestens eine Befestigungseinrichtung (2) auf der ersten Ebene (E1) vorgesehen,
c) der Rohrbogenhalter (1) weist eine Grundplatte (1a) mit einer als Langloch ausgebildeten Befestigungsöffnung (1g) für ein Befestigungsmittel auf, die die mindestens eine Befestigungseinrichtung bilden,
d) mit der Grundplatte (1a) ist das Rohrführungsbauteil (1) mit seinen Bereichen (1b, 1c, 1d, 1e und 1h) verbunden,
e) das Rohrführungsbauteil (1) umhüllt das eingelegte Rohr (3) zumindest teilweise,
f) das Rohrführungsbauteil (1) weist in seinem oberen Bereich (1b,1c) die Form eines zu der ersten Ebene (E1) parallelen ersten Umlenkbogens auf,
g) der Bogen mündet in einem Bereich (1c) in eine Tangente, die parallel zur Stoßkante (S) der beiden Ebenen (E1,E2) verläuft,
h) an die Tangente schließt sich ein zweiter Umlenkbogen an, der parallel zur zweiten Ebene (E2) verläuft und dessen Verlauf in etwa senkrecht von der ersten Ebene (E1) wegführt, **dadurch gekennzeichnet, daß**
i) das Langloch (1g) parallel zu dem im oberen Bereich (1b) geführten Rohr (3) verläuft und in Richtung auf den Umlenkbogen und in etwa senkrecht auf die zweite Ebene (E2) weist,
k) die Grundplatte (1a) einen Fortsatz (1f) aufweist, der senkrecht auf der Stosskante (S) steht und sich auf der zweiten Ebene (E2) abstützt,
I) im Bereich des zweiten Umlenkbogens an diesem auf, gegenüberliegenden Seiten Zusatzteile (1h und 1d) angebracht sind,
m) Bereiche des Rohrführungsbauteiles das Rohr (3) jeweils soweit umfassen, daß dasselbe in seinem minimalen Biegeradius gehalten und vor herausfallen geschützt ist.

2. Rohrbogenhalter nach Anspruch 1, **dadurch gekennzeichnet, daß** die Winkel zwischen den Bereichen (1 b-1 c) und (1 c-1 e) jeweils 90° betragen.

3. Rohrbogenhalter nach Anspruch 1 und 2, **dadurch gekennzeichnet, daß** die Grundplatte (1a) des Rohrbogenhalters (1) und die Rohrführung (1b, 1c, 1d, 1e) einteilig ausgebildet sind.

4. Rohrbogenhalter nach Anspruch 1 und einem der folgenden Ansprüche, **dadurch gekennzeichnet, daß** das Rohrführungsbauteil im Bereich der zweiten Ebene (E2) sich über zwei freie Schenkel auf der zweiten Ebene (E2) abstützt und dort etwa U-förmig ausgebildet ist.

5. Rohrbogenhalter nach Anspruch 1 und einem der folgenden Ansprüche, **dadurch gekennzeichnet, daß** der Rohbogenhalter einerseits fest mit einer Registerplatte (4) verbunden ist, dort die Anschlussenden der in der Registerplatte verlegten Rohre (3) aufnimmt und sie in zwei 90° Winkeln zu den im 90° Winkel zur Registerplatte (4) auf dem Boden oder der Decke (5) verlegten Versorgungsleitungen (6) führt.

## Claims

1. Pipe bend bracket with a guide means for redirecting a pipe (3) from a first plane (E1) into a second plane (E2), comprising the features:
a) the two planes (E1 and E2) meet at an abutment edge (S),
b) one pipe guide means (1) and at least one fastening device (2) are provided on the first plane (E1).
c) The pipe bend bracket (1) has a base plate (1 a) with a fastening opening (1 g) designed as an elongated hole for one fastening means, which form at least one fastening device,
d) The pipe guide means (1) with the areas (1 b, 1 c, 1 d, 1 e and 1 h) is connected to the base plate (1 a),
e) The pipe guide means (1) encloses the inserted pipe (3) at least partially,
f) The pipe guide means (1) features the shape of a first redirecting bend parallel to the first plane (E1) in its upper area (1 b, 1 c),
g) In an area (1c) the bend opens into a tangent line running parallel to the abutment edge (S) of the two planes (E1, E2),
h) A second redirecting pipe is joined at the tangent line, running parallel to the second plane (E2) and leading away from the first plane (E1) approximately perpendicularly, **characterized in that**
i) The elongated hole (1g) runs parallel to the pipe (3) supported in the upper area (1 b) and points towards the redirecting bend and approximately perpendicularly to the second plane (E2),
j)
k) The base plate (1 a) has an extension (1 f) which is arranged vertically on the abutment edge (S) and braces itself against the second plane (E2),
I) In the area of the second redirecting bend on said bend and on opposing sides there are arranged additional parts (1 h and 1 d),
m) Areas of the pipe guide means each enclose the pipe (3) to such an extent that said pipe is held in its minimum bending radius and is protected against falling out.

2. Pipe bend bracket according to claim 1, **characterized in that** the angles between the areas (1 b-1 c) and (1 c-1 e) are 90° respectively.

3. Pipe bend bracket according to claims 1 and 2, **characterized in that** the base plate (1 a) of the pipe bend bracket (1) and the pipe guide means (1 b, 1 c, 1 d, 1 e) are formed as one part.

4. Pipe bend bracket according to claim 1 and one of the following claims, **characterized in that** in the area of the second plane (E2) the pipe guide means braces itself against the second plane (E2) by means of two open legs, where it is of an approximate U-shape.

5. Pipe bend bracket according to claim 1 and one of the following claims, **characterized in that** the pipe bend bracket is rigidly connected to a register plate (4) at one side where it takes up the connecting ends of the pipes (3) routed in the register plate (4) and leads them in two 90° angles to the supply pipes (6) routed on the floor or ceiling (5) at 90° to the register plate (4).

## Revendications

1. Support de tube coudé comportant un guide de cheminement de tube (3) entre un premier plan (E1) et un second plan (E2) et présentant les caractéristiques suivantes :
a) les deux plans (E1 et E2) sont reliés par une arête (S),
b) un guide de tube (1) et au moins un dispositif de retenue (2) sont prévus sur le premier plan (E1),
c) le support de tube coudé (1) comporte une plaque d'appui (1 a) présentant une ouverture de fixation (1 g) sous forme de trou oblong destinée à recevoir un élément de fixation, l'ouverture et l'élément de fixation formant au moins un dispositif de fixation,
d) la plaque d'appui (1 a) assure la liaison du guide de tube (1) avec les zones (1 b, 1 c, 1 d, 1 e et 1 h) qui le composent,
e) le guide de tube (1) enveloppe au moins partiellement le tube inséré (3),
f) le guide de tube (1) se présente dans sa partie supérieure (1 b, 1 c) sous la forme d'un premier coude parallèle au premier plan (E1),
g) dans une zone (1 c) le coude débouche dans une tangente parallèle à l'arête (S) des deux plans (E1, E2),
h) est raccordé à la tangente un second coude parallèle au second plan (E2), qui s'éloigne du premier plan (E1) pour ainsi dire à la verticale, **caractérisé en ce que**
i) le trou oblong (1 g) est parallèle au tube (3) guidé dans la zone supérieure (1 b) et qu'il est orienté vers le coude et pour ainsi dire à la verticale vers le second plan (E2),
k) la plaque d'appui (1a) comporte une extension (1f) qui repose à la verticale sur l'arête (S) et s'appuie sur le second plan (E2),
I) dans la zone du second coude, des parties complémentaires (1 h et 1 d) sont prévues de part et d'autre sur ledit second coude,
m) des parties du guide de tube contiennent le tube (3) de sorte que ledit tube est maintenu dans son rayon minimal de courbure, l'empêchant ainsi de tomber.

2. Support de tube coudé conformément à la revendication 1, **caractérisé en ce que** les zones (1 b-1 c) et (1 c-1 e) forment des angles de 90°.

3. Support de tube coudé conformément à la revendication 1 et 2, **caractérisé en ce que** la plaque d'appui (1 a) du support de tube coudé (1) et le guide complet (1 b, 1 c, 1 d, 1 e) sont réalisés en une seule pièce.

4. Support de tube coudé conformément à la revendication 1 et l'une des revendications suivantes, **caractérisé en ce que** le guide de tube repose dans la zone du second plan (E2) sur deux branches indépendantes et présente à cet endroit globalement une forme de U.

5. Support de tube coudé conformément à la revendication 1 et l'une des revendications suivantes, **caractérisé en ce que** le support de tube coudé est d'abord relié solidement à une plaque de registre (4), qu'il y reçoit les extrémités de raccordement des tubes (3) qui cheminent sur la plaque de registre et les amène par deux angles de 90° aux conduites d'alimentation (6) posées dans le sol ou le plafond (5) à 90° par rapport à la plaque registre (4)
